# EUROPÄISCHE PATENTSCHRIFT

(11) **EP 0 979 351 B1**
(45) Veröffentlichungstag und Bekanntmachung des Hinweises auf die Patenterteilung: **24.07.2002**
(21) Anmeldenummer: 97949969.6
(22) Anmeldetag: 28.11.1997
(51) Int. Cl.: F02D 45/00, G05B 5/01, F02B 39/16

(54) **VERFAHREN ZUM REGELN DER AUFLADUNG EINER BRENNKRAFTMASCHINE**
LOAD CONTROL IN AN INTERNAL COMBUSTION ENGINE
PROCEDE DE REGULATION DE LA CHARGE D'UN MOTEUR A COMBUSTION INTERNE

(30) Priorität: 27.03.1997 DE 19712861
(43) Veröffentlichungstag der Anmeldung: 16.02.2000
(73) Patentinhaber: ROBERT BOSCH GMBH, 70442 Stuttgart (DE)
(72) Erfinder: TORNO, Oskar, D-71701 Schwieberdingen (DE); KLUTH, Carsten, D-70469 Stuttgart (DE); HÄMING, Werner, D-74861 Neudenau (DE); SURJADI, Iwan, D-71665 Vaihingen (DE); FRANKE, Steffen, D-71701 Schwieberdingen (DE); BÄUERLE, Michael, D-71706 Markgröningen (DE)
(86) Internationale Anmeldenummer: DE9702780
(87) Internationale Veröffentlichungsnummer: WO9844252

(56) Entgegenhaltungen:
- DE-A- 3 530 579
- DE-C- 19 502 150
- GB-A- 2 267 978
- US-A- 5 298 845

## Beschreibung

### Stand der Technik

Die Erfindung betrifft ein Verfahren zum Regeln der Aufladung einer Brennkraftmaschine, wobei aus der Regelabweichung zwischen einem Soll-Ladedruck und dem Ist-Ladedruck eine Stellgröße erzeugt wird, die mindestens einen von einem Integralregler gelieferten Anteil aufweist, und für den Integral-Anteil ein Grenzwert vorgegeben wird, der aus einem von mehreren Betriebskenngrößen der Brennkraftmaschine abhängigen Grundwert und einem diesem überlagerten Korrekturwert ermittelt wird, gemäß Anspruch 1, erster Teil.

Ein derartiges Verfahren ist aus der DE 195 02 250 C1 bekannt. Die Stellgröße für den Lader setzt sich zusammen aus einem Proportional-, einem Differential-, und einem Integral-Anteil. Der Integral-Anteil wird sowohl im stationären als auch im dynamischen Betrieb der Brennkraftmaschine begrenzt. Der Grenzwert des Integral-Anteils im dynamischen Betrieb besteht aus einem Grundwert, der in Abhängigkeit von Betriebskenngrößen aus Kennlinien entnommen wird und einem dem Grundwert überlagerten Korrekturwert. Der Korrekturwert wird in Abhängigkeit von der Ladelufttemperatur, dem Umgebungsdruck und der Drehzahl der Brennkraftmaschine adaptiert. Detailliertere Angaben über die Art der Adaption des Korrekturwertes sind der genannten Druckschrift nicht zu entnehmen.

Der Erfindung liegt daher die Aufgabe zugrunde, ein Verfahren der eingangs genannten Art anzugeben, das eine sehr robuste Regelung der Aufladung einer Brennkraftmaschine ermöglicht, insbesondere wenn extrem veränderliche Störgrößen auftreten, z.B. stark unterschiedliche Ladedruck-Sollwerte bei Vollast oder bei einer sehr unterschiedlichen Drehzahldynamik.

### Vorteile der Erfindung

Gemäß den Merkmalen des Anspruchs 1 wird die genannte Aufgabe gelöst.

Der Korrekturwert wird adaptiv in Abhängigkeit von der Drehzahl bestimmt, wobei mehrere Drehzahlbereiche vorgegeben sind. Der adaptierte Korrekturwert wird schrittweise verringert, wenn die Regelabweichung kleiner als eine Schwelle ist und der Integral-Anteil kleiner als der akutuelle Grenzwert ist. Eine schrittweise Vergrößerung des adaptierten Grundwertes erfolgt, wenn die Regelabweichung größer Null ist und der Integral-Anteil gleich oder größer als der aktuelle Grenzwert ist.

Mit einem so gebildeten Korrekturwert für den Grenzwert des Integral-Anteils können starke Überschwinger bei der Ladedruckregelung vermieden und trotzdem ein schnelles Einschwingverhalten des Reglers erreicht werden. Vor allem bei sehr leistungsstarken Fahrzeugen, die oft im dynamischen Betrieb gefahren werden, bewirkt das erfindungsgemäße Verfahren wegen seiner guten Adaptionsfähigkeit des Grenzwertes für den Integral-Anteil der Stellgröße, ein ausgezeichnetes Regelverhalten der Ladedruck-Regelung.Mit dem Verfahren der Erfindung werden Toleranzen im Regelkreis zuverlässig beherrscht.

Zweckmäßige und vorteilhafte Weiterbildungen des erfindungsgemäßen Verfahrens gehen aus den Unteransprüchen hervor.

### Beschreibung eines Ausführungsbeispiels

Anhand eines in der Zeichnung dargestellten Ausführungsbeispiels wird nachfolgend die Erfindung näher erläutert. Es zeigen:
Figur 1 ein Funktionsdiagramm eines Ladedruck-Reglers,
Figur 2 ein Funktionsdiagramm zur Ermittlung von Reglerparametern,
Figur 3 ein Funktionsdiagramm zur Ermittlung eines Grenzwertes für einen Integral-Anteil einer Ladedruck-Stellgröße und
Figur 4 ein Funktionsdiagramm zur drehzahlabhängigen Adaption eines Korrekturwertes für den Grenzwert.

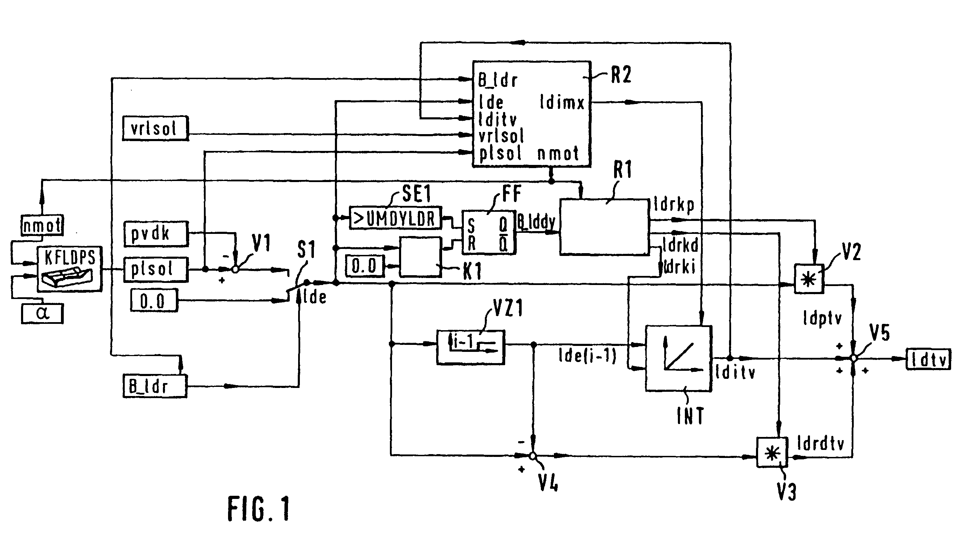

Wie dem Funktionsdiagramm in Figur 1 zu entnehmen ist, wird aus einem Kennfeld KFLDPS in Abhängigkeit von der Motordrehzahl nmot und der Drosselklappenstellung α ein Soll-Ladedruck psoll herausgelesen. Außerdem wird mit einem Drucksensor vor der Drosselklappe der Ist-Ladedruck pvdk gemessen. In einem Verknüpfungspunkt V1 wird die Differenz zwischen dem Soll-Ladedruck plsoll und dem Ist-Ladedruck pvdk bestimmt. Diese Differenz wird als Regelabweichung lde bezeichnet. Liegt die Bedingung B_ldr für eine Aktivierung der Ladedruckregelung vor, so wird ein Schalter S1 an den Ausgang des Verknüpfungspunktes V1 gelegt, so daß am Ausgang des Schalters S1 als Regelabweichung lde die genannte Differenz zwischen dem Soll-Ladedruck plsoll und dem Ist-Ladedruck pvdk anliegt. Ist die Ladedruckregelung nicht aktiv, die Bedingung B_ldr also nicht gegeben, liegt der Schalter S1 auf 0.0. Die Regelabweichung lde ist in diesem Fall also Null.

Ein Schwellenwertentscheider SE1 legt an den S-Eingang eines SR-Flip-Flops FF eine logische 1, wenn die Regelabweichung lde eine Schwelle UMDYLDR übersteigt. Der R-Eingang des RS-Flip-Flops FF ist mit dem Ausgang eines Komparators K1 verbunden. Dieser Komparator K1 gibt eine logische 1 ab, wenn die Regelabweichung lde kleiner oder gleich 0.0 ist. Unter den genannten Bedingungen liegt am Ausgang Q des RS-Flip-Flops FF eine logische 1 an, wenn die Regelabweichung lde die Schwelle UMDYLDR übersteigt, das heißt ein Übergang vom stationären in den dynamischen Betrieb erfolgt. Falls am R-Eingang des RS-Flip-Flops FF eine logische 1 anliegt, das heißt die Regelabweichung lde kleiner 0 ist (der Ist-Ladedruck ist größer als der Soll-Ladedruck), so wird das Flip-Flopp FF zurückgesetzt und an seinem Ausgang Q liegt eine logische 0 an. Das Ausgangssignal B_lddy am Q-Ausgang des Flip-Flops FF gibt an, ob dynamischer Betrieb (logische 1) oder stationärer Betrieb (logisch 0) gegeben ist.

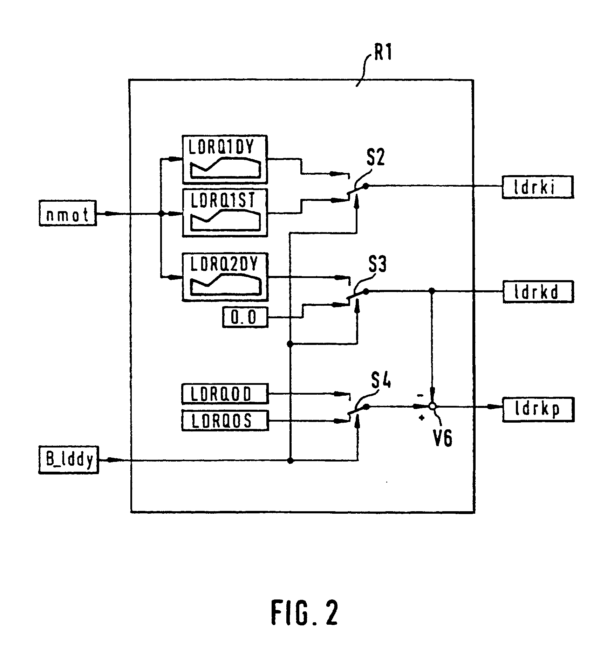

Im Funktionsblock R1 werden in Abhängigkeit von der Betriebsbedingung B_lddy und der Motordrehzahl nmot ein Proportional- ldrkp, ein Differential- ldrkd und ein Integral-Regelparameter ldrki ermittelt. Die Bestimmung der Reglerparameter ldrkp, ldrkd, ldrki im Funktionsblock R1 wird weiter unten anhand von Figur 2 noch beschrieben.

Durch Produktbildung des Proportional-Reglerparameters ldrkp mit der Regelabweichung lde im Multiplizierer V2 entsteht ein Proportional-Anteil ldptv für die Stellgröße ldtv des Turboladers.

Ein Differential-Anteil ldrdtv zur Stellgröße ldtv resultiert aus der Produktbildung im Multiplizierer V3 zwischen dem Differential-Regelparameter ldrkd und der Ablage zwischen der aktuellen Regelabweichung lde und der einen Zeittakt (ca. 50 ms) zuvor ermittelten Regelabweichung lde(i-1). Die Differenz zwischen der aktuellen Regelabweichung lde und der zuvor bestimmten Regelabweichung lde(i-1) wird im Verknüpfungspunkt V4 gebildet. Ein Verzögerungsglied VZ1 liefert die um einen Zeittakt verzögerte Regelabweichung lde(i-1).

Der Integral-Anteil lditv zur Stellgröße ldtv wird von einem Integrator INT gebildet, welcher das Produkt aus dem Integral-Regelparameter ldrki und der verzögerten Regelabweichung lde(i-1) berechnet und dieses Produkt dem im vorhergehenden Zeittakt bestimmten Integral-Anteil lditv(i-1) überlagert.

Im Verknüpfungspunkt V5 werden schließlich der Proportional-Anteil ldptv, der Differential-Anteil ldrdtv und der Integral-Anteil lditv addiert, woraus die Stellgröße ldtv für ein Bypass-Ventil des Turboladers resultiert.

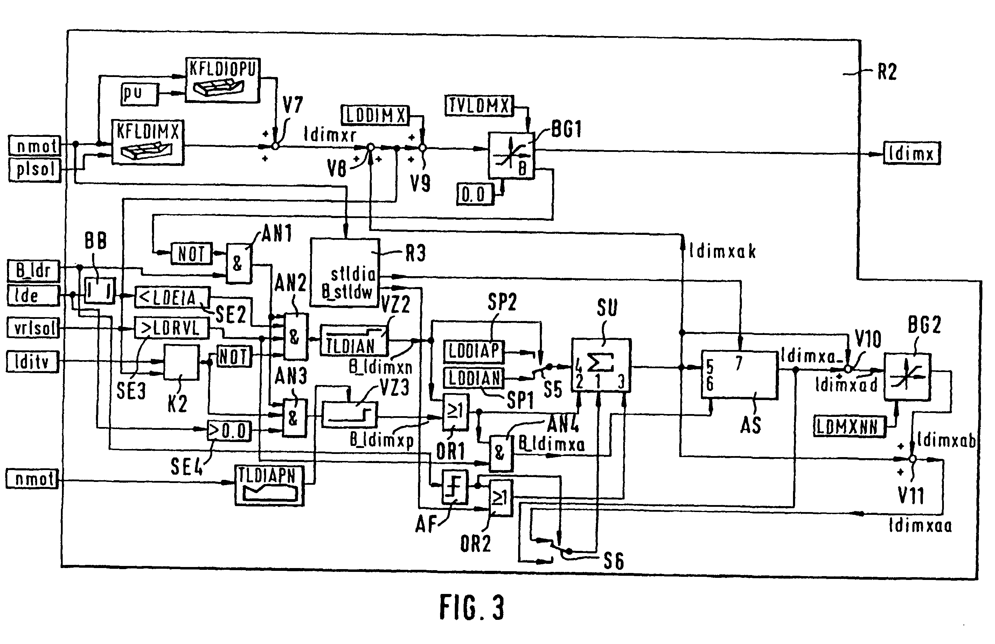

Der Integral-Anteil lditv wird nach oben hin begrenzt, um Überschwinger bei der Regelung des Ladedrucks zu vermeiden. Der Grenzwert ldimx für den Integral-Anteil lditv wird in einem Schaltblock R2, der weiter unten anhand von Figur 3 beschrieben wird, ermittelt und zwar in Abhängigkeit von der Regelabweichung lde, dem Integral-Anteil lditv, dem Soll-Ladedruck plsol, der Motordrehzahl nmot und dem Verhältnis zwischen der Sollfüllung und der Maximalfüllung der Zylinder vrlsol.

Der in Figur 2 dargestellte Funktionsblock R1 enthält drei von der Motordrehzahl nmot abhängige Kennlinienfelder LDRQ1DY, LDRQ1ST und LDRQ2DY. Liegt die Bedingung für dynamischen Betrieb B_lddy an, so wird vom Schalter S2 der Integral-Reglerparameter ldrki aus der Kennlinie LDRQ1DY für dynamischen Betrieb an den Ausgang durchgeschaltet. Vom Schalter S3 wird aus der Kennlinie LDRQ2DY der Differential-Reglerparameter ldrkd an den Ausgang durchgeschaltet. Der Proportional-Reglerparameter ldrkp entsteht durch Differenzbildung im Verknüpfungspunkt V6 zwischen einem Festwert LDRQOD, der von einem Schalter S4 an den Verknüpfungspunkt V6 geschaltet wird, und dem Differential-Reglerparameter ldrkd. Ist die Bedingung B_lddy für dynamischen Betrieb nicht gegeben, sondern befindet sich die Maschine im Stationärbetrieb, dann wird der Integral-Reglerparameter ldrki aus der Kennlinie LDRQ1ST entnommen; dementsprechend liegt jetzt der Schalter S2 an der Kennlinie LDRQ1ST. Der Differential-Reglerparameter ldrkd wird über den Schalter SR3 auf 0.0 gelegt, und der Proportional-Reglerparameter ldrkp wird vom Schalter S4 auf einen Festwert LDRQOS gesetzt. Die Festwerte LDRQOD, LDRQOS und die Kennlinien LDRQ1DY, LDRQ1ST und LDRQ2DY werden durch Versuche am Motorprüfstand so appliziert, daß die Laderegelung im dynamischen und stationären Betriebszustand optimiert ist.

In Figur 3 ist der Funktionsblock R2 dargestellt, welcher aus der Motordrehzahl nmot, dem Soll-Ladedruck plsol, der Regelabweichung lde, dem Verhältnis von Sollfüllung zu Maximalfüllung der Zylinder vrlsol und dem Integral-Anteil lditv der Stellgröße den Grenzwert ldimx für den Integral-Anteil lditv ableitet.

Der Grenzwert ldimx setzt sich zusammen aus einem Grundwert ldimxr und einem diesem im Verknüpfungspunkt V8 überlagerten Korrekturwert ldimxak. Zusätzlich kann dem Grenzwert ldimx im Verknüpfungspunkt 9 noch ein fest vorgegebener Wert LDDIMX hinzuaddiert werden. Dieser Wert LDDIMX entspricht einem kleinen Bruchteil (ca. 0...5%) des Grenzwertes ldimx, der sicherstellt, daß dieser kleine Wert auf keinen Fall unterschritten wird. Ist der aktuelle Integral-Anteil größer als der Grenzwert ohne den einen Sicherheitsabstand darstellenden Wert LDDIMX, so kann auch ohne Anheben des Grenzwertes der Ladedruck spontan geregelt werden, sofern die auszuregelnde Ladedruckabweichung nicht größer als der Sicherheitsabstand LDDIMX ist.

Eine Begrenzungsstufe BG1 begrenzt den Grenzwert ldimx auf einen vorgebbaren Wert TVLDMX, der beispielsweise 95% des Tastverhältnisses der Stellgröße für die Ladedruckregelung entspricht.

Der aktuelle Korrekturwert ldimxak für den Grenzwert ldimx erscheint am Ausgang eines Summierers SU. In diesem Summierer SU wird der an seinem Eingang 1 anliegende Korrekturwert unter gewissen Bedingungen entweder schrittweise verkleinert oder schrittweise vergrößert.

Damit eine schrittweise Verringerung des Korrekturwertes im Summierer SU vorgenommen wird, sind folgende Bedingungen zu erfüllen:
Die Laderegelung muß aktiv sein, das heißt die Bedingung B_ldr muß gesetzt sein, und es darf der aktuelle Grenzwert ldimx nicht am oberen oder unteren Ende der Begrenzungsstufe BG1 liegen. Beide Informationen liegen an den Eingängen eines UND-Gatters AN1 an, das eine logische 1 an ein weiteres UND-Gatter AN2 abgibt, wenn die genannten zwei Bedingungen erfüllt sind. Eine weitere Bedingung besteht darin, daß der Betrag der Regelabweichung lde kleiner einer Schwelle LDEIA sein muß. Dazu wird die Regelabweichung lde einem Betragsbilder BB und anschließend einem Schwellenwertentscheider SE2 zugeführt, der an seinem Ausgang eine logische 1 an das UND-Gatter AN2 abgibt, wenn der Betrag der Regelabweichung lde unterhalb der Schwelle LDEIA liegt. Diese Schwelle LDEIA ist nahezu 0.

Weiterhin wird in einem Schwellwertentscheider SE3 überprüft, ob das Verhältnis der Sollfüllung zur Maximalfüllung der Zylinder vrlsol oberhalb einer Schwelle LDRVL liegt. Ist das der Fall, ist Vollastbetrieb der Maschine gegeben und der Schwellenwertentscheider SE3 gibt eine logische 1 an einen Eingang des UND-Gatters AN2 ab.

Als letzte Bedingung wäre noch zu erfüllen, daß der Integral-Anteil lditv kleiner als der Grenzwert ldimx ist. Ein Komparator K2 vergleicht dementsprechend den Integral-Anteil lditv an der Stellgröße und den Grenzwert ldimx vor dem Verknüpfungspunkt V9. Am Ausgang des Komparators K2 erscheint eine logische 1, wenn der Integral-Anteil lditv größer als der Grenzwert ldimxr ist. Über einen Inverter NOT gelangt das Ausgangssignal des Komparators K2 an einen Eingang des UND-Gatters AN2. An diesem Eingang des UND-Gatters AN2 liegt also eine logische 1 an, wenn der Integral-Anteil lditv kleiner als der Grenzwert ldimx ist.

Wenn alle genannten Bedingungen erfüllt sind, liegt am Ausgang des UND-Gatters AN2 eine logische 1. Diese Bedingung B_ldimxn für eine negative schrittweise Nachführung des Korrekturwertes im Summierer SU wird in einem Verzögerungsglied VZ2 um eine feste Entprellzeit TLDIAN verzögert an einen Schalter S5 und an ein ODER-Gatter OR1 geführt. Ist die Bedingung B_ldimxn für eine negative schrittweise Nachführung des Grenzwertes gegeben, so verbindet der Schalter S5 den Eingang 4 des Summierers SU mit einem Festwertspeicher SP1, in dem die Schrittweite LDDIAN für die negative Nachführung des Grenzwertes abgelegt ist. Ist die Bedingung B_ldimxn nicht erfüllt (entspricht einer logischen 0 am Ausgang des UND-Gatters AN2), so schaltet der Schalter S5 auf einen Speicher SP2 um, in dem die Schrittweite LDDIAP für eine positive Nachführung des Grenzwertes abgelegt ist.

Für eine schrittweise positive Nachführung des Grenzwertes sind folgende drei Bedingungen zu erfüllen :
- Wie schon bei der negativen schrittweisen Nachführung muß, wie vorangehend beschrieben, am Ausgang des UND-Gatters AN1 eine logische 1 anliegen.
- Außerdem muß die Regelabweichung lde größer 0 sein, wobei schon eine sehr kleine Abweichung von 0 ausreicht. Ein Schwellenwertentscheider SE4 erzeugt an seinem Ausgang eine logische 1, wenn diese Bedingung erfüllt ist.
- Schließlich muß der aktuelle Integral-Anteil lditv der Stellgröße größer sein als der aktuelle Grenzwert ldimx. Wie schon zuvor beschrieben, wird diese Bedingung mit dem Komparator K2 überprüft.

Sowohl der Ausgang dieses Komparators K2 als auch der Ausgang des Schwellenwertentscheiders SE4 als auch der Ausang des UND-Gatters AN1 sind an ein UND-Gatter AN3 gelegt. An seinem Ausgang liegt eine logische 1 an, wenn die drei zuvor genannten Bedingungen erfüllt sind.

Das Ausgangssignal des UND-Gatters AN3, die Bedingung B_ldimxp für die schrittweise positive Nachführung des Korrekturwertes, wird über ein Verzögerungsglied VZ3 geführt, dessen Verzögerungszeit gleich einer Entprellzeit ist, die aus einer von der Motordrehzahl nmot abhängigen Kennlinie TLDIAPN entnommen wird. Die Bedingung B_ldimxn für die negative schrittweise Nachführung des Grenzwertes und die Bedingung B_ldimxp für die positive schrittweise Nachführung liegen beide an den Eingängen des OR-Gatters OR1 an. Sein Ausgangssignal, das an dem Eingang 2 des Summierers SU anliegt, signalisiert dem Summierer SU, ob eine positive oder negative schrittweise Nachführung des an seinem Eingang 1 anliegenden Grenzwertes vorgenommen werden soll.

Der am Ausgang des Summierers SU anliegende Korrekturwert ldimxak wird auch einem Eingang 5 eines Funktionsblocks AS zugeführt, in dem eine Adaption des Korrekturwertes erfolgt. Diese Adaptionn wird nur dann vorgenommen, wenn zum einen Vollastbetrieb der Maschine gegeben ist und zum anderen die Bedingung für eine positive oder eine negative schrittweise Nachführung des Korrekturwertes erfüllt ist. Eine Information über den Vollastbetrieb kann am Ausgang des oben beschriebenen Schwellenwertentscheiders SE3 abgegriffen werden. Die Information darüber, ob eine positive oder schrittweise Nachführung des Korrekturwertes erfolgt, kann dem Ausgangssignal des ODER-Gatters OR1 entnommen werden. Sowohl das Ausgangssignal des Schwellenwertentscheiders SE3 als auch das Ausgangssignal des ODER-Gatters OR1 werden den Eingängen eines UND-Gatters AN4 zugeführt. Bei Erfüllung der beiden genannten Bedingungen ist das Ausgangssignal B_ldimxa des UND-Gatters AN4 eine logische 1. Die Bedingung B_ldimxa für eine Adaption des Korrekturwertes liegt am Eingang 6 des Funktionsblockes AS an. Immer wenn die Bedingung B_ldimxa =1 ist, wird der aktuelle Wert des Summierers SU in eine entsprechende Speicherzelle des Funktionsblocks AS übernommen, in dem eine Vielzahl von eine Adaptionskennlinie nachbildenden Werten abgespeichert ist.

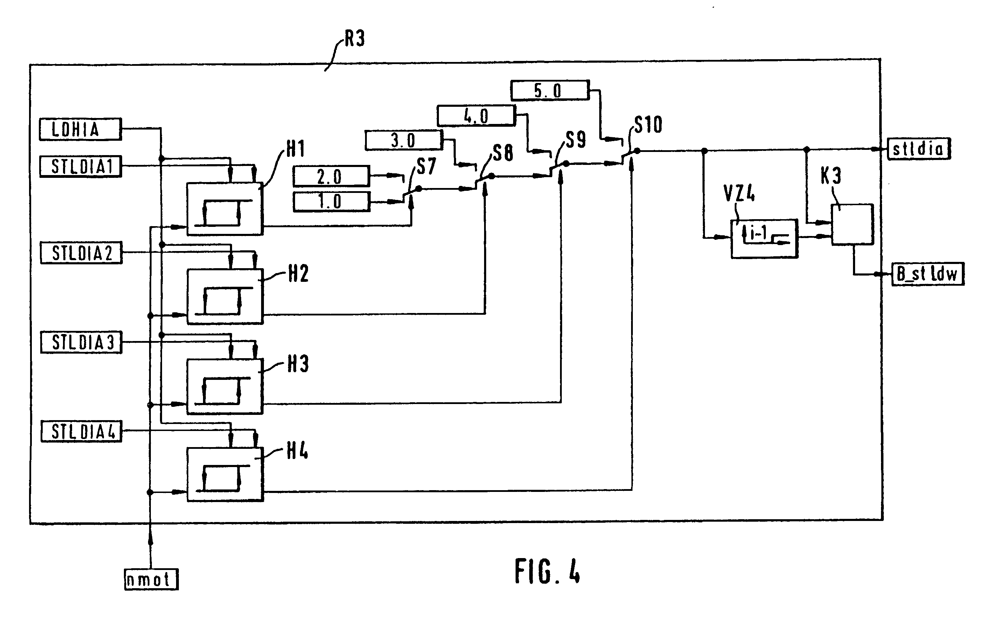

Die Stützstellen stldea für die Adaption des Korrekturwertes im Funktionsblock AS werden von einem Funktionsblock R3 geliefert, der anhand der Figur 4 weiter unten noch beschrieben wird. Der Funktionsblock R3 gibt außerdem eine Information B_stldw über Stützstellenwechsel ab.

Einem Eingang 1 des Summierers SU für die Bildung des Korrekturwertes ldimxak wird entweder der adaptierte Korrekturwert ldimxa vom Ausgang des Funktionsblocks AS oder ein adaptierter Korrekturwert ldimxaa zugeführt, bei dem in negative Richtung auftretende Sprünge auf einen Minimalwert begrenzt worden sind. Über einen Schalter S6 wird die Auswahl zwischen.dem adaptierten Korrekturwert ldmixa und dem begrenzten adaptierten Korrekturwert ldimxaa getroffen. Der Schalter S6 schaltet auf den nicht begrenzten adaptierten Korrekturwert ldimxa zu Beginn der Aktivierung der Ladedruckregelung, das heißt unmittelbar nach Erscheinen einer Anstiegsflanke der Bedingung B_ldr für die Ladedruckregelung. Die Anstiegsflanke des Signals B_ldr erkennt ein FlipFlop AF. Ansonsten liegt der Schalter S6 in der anderen Position und führt dem Eingang 1 des Summierers SU den begrenzten adaptierten Korrekturwert ldimxaa zu.

Ein Eingang 3 des Summierers SU erhält vom Ausgang eines ODER-Gatters OR2 die Information, ob eine Anstiegsflanke des Ladedruck-Aktivierungssignals B_ldr vorliegt oder ob das Signal B_stldw Stützstellenwechsel in dem Funktionsblock R3 anzeigt.

Der begrenzte adaptierte Korrekturwert ldimxaa wird folgendermaßen gebildet. Von dem am Ausgang des Funktionsblocks AS anliegenden adaptierten Korrekturwert ldimxa wird in einem Verknüpfungspunkt V10 der vom Summierer SU ausgegebene aktuelle Korrekturwert ldimxak subtrahiert. Das Differenzsignal ldimxad wird einer Begrenzungsstufe BG2 zugeführt. Die Begrenzungsstufe BG2 begrenzt negative Sprünge des Differenzsignals ldimxad auf einen vorgegebenen Grenzwert LDMXNN. Das begrenzte Differenzsignal ldimxab am Ausgang der Begrenzerstufe BG2 wird im Verknüpfungspunkt V11 zum aktuellen Korrekturwert ldimxak wieder hinzuaddiert, so daß daraus schließlich der begrenzte adaptierte Korrekturwert ldimxaa entsteht.

Wie die Stützstellen sdldea, welche dem Funktionsblock AS für die Adaption am Eingang 7 zugeführt werden, gebildet werden, kann man der Figur 4 entnehmen. Es sind beispielsweise vier eine Hysterese erzeugende Schaltung H1, H2, H3 und H4 vorgesehen. Eine an allen Schaltungen H1 bis H4 anliegende Hysteresekonstante LDHIA gibt die Hysteresebreite vor. Die Hysteresen der vier Schaltungen H1 bis H4 sind bezüglich der Drehzahl nmot so verteilt, daß jede Hysterese einen von vier Drehzahlbereichen abdeckt. Diese drehzahlabhängige Lage der einzelnen Hysteresen wird durch Konstanten STLDIA1, STLDIA2, STLDIA3 und STLDIA4 den einzelnen Hystereseschaltungen H1 bis H4 vorgegeben. Je nachdem in welchem der vier Drehzahlbereiche sich die aktuelle Drehzahl nmot befindet, tritt am Ausgang der Hystereseschaltung H1 oder H2 oder H3 oder H4 ein Signal aus. Jedes der Ausgangssignale steuert einen Schalter S7, S8, S9 und S10. An den Eingängen der Schalter S7, S8, S9 und S10 liegen fünf Stützwerte 1.0, 2.0, 3.0, 4.0 und 5.0. Je nach Schalterstellung, das heißt in Abhängigkeit vom aktuellen Drehzahlbereich nmot, wird einer der fünf Stützstellen als Ausgangssignal stldia durchgeschaltet und gelangt an den Eingang 7 der Adaptionsschaltung AS. Je nach Größe der Stützstelle stldea wird die Steilheit der Adaptionskennlinie vergrößert oder verringert; der adaptierte Korrekturwert ldimxa wird also größer oder kleiner durch die Adaption.

In den Hystreseschaltungen H1...H4 gibt es einen rechten Schaltpunkt STLDIA1...4 und einen linken Schaltpunkt STLDIA1...4 - LDHIA. Bei steigender Drehzahl, das heißt wenn nmot ≥ STLDIA1...4 ist, wird der Ausgang der betreffenden Hystreseschaltung H1...4 auf "1" geschaltet. Danach folgt eine Rückschaltung auf "0", wenn nmot ≤ STLDIA1...4 - LDHIA ist.

Die Information über den Stützstellenwechsel B stldw wird mit Hilfe eines Komparators K3 gewonnen. Dieser vergleicht den aktuellen Stützstellenwert stldia mit dem einen Zeittakt zuvor ermittelten Stützstellenwert stldia (i-1). Ein Verzögerungsglied VZ4 stellt den vorangehenden Stützwert stldia(i-1) bereit für den Komparator K3. Unterscheiden sich die beiden an den Eingängen des Komparators K3 anliegenden Stützstellenwerte stldia und stldia(i-1) voneinander, so gibt der Komparator K3 an seinem Ausgang die Information eines Stützstellenwechsels B_stldw ab.

## Patentansprüche

1. Verfahren zum Regeln der Aufladung einer Brennkraftmaschine, wobei aus der Regelabweichung zwischen einem Soll-Ladedruck und dem Ist-Ladedruck eine Stellgröße erzeugt wird, die mindestens einem von einem Integralregler gelieferten Anteil aufweist, und für den Integral-Anteil ein Grenzwert vorgegeben wird, der aus einem von mehreren Betriebskenngrößen der Brennkraftmaschine abhängigen Grundwert und einem diesem überlagerten Korrekturwert ermittelt wird, wobei der Korrekturwert (ldimxa, ldimxaa) adaptiv in Abhängigkeit von der Drehzahl (nmot) bestimmt wird, wobei mehrere Drehzahlbereiche vorgegeben sind, **dadurch gekennzeichnet,**
- **daß** der adaptierte Korrekturwert (ldimxa, ldimxaa) schrittweise verringert wird, wenn die Regelabweichung (lde) kleiner als eine Schwelle (LDEIA) ist und der Integral-Anteil (lditv) kleiner als der aktuelle Grenzwert ist,
- und **daß** der adaptierte Korrekturwert (ldimxa, ldimxaa) schrittweise vergrößert wird, wenn die Regelabweichung (lde) größer Null ist und der Integral-Anteil (lditv) gleich oder größer als der aktuelle Grenzwert (ldimx) ist.

2. Verfahren nach Anspruch 1, **dadurch gekennzeichnet, daß** die schrittweise Verringerung des adaptierten Korrekturwertes (ldimxa, ldimxaa) nur dann durchgeführt wird, wenn Vollastbetrieb der Maschine gegeben ist und wenn der aktuelle Grenzwert (ldimx) des Integral-Anteils (lditv) nicht an einer unteren Schwelle der Stellgröße (ldtv) liegt.

3. Verfahren nach Anspruch 1, **dadurch gekennzeichnet, daß** die schrittweise Vergrößerung des adaptierten Korrekturwertes (ldimxa, ldimxaa) nur dann durchgeführt wird, wenn der aktuelle Grenzwert (ldimx) des Integral-Anteils (lditv) nicht an einer oberen Schwelle der Stellgröße (ldtv) liegt.

4. Verfahren nach Anspruch 1, **dadurch gekennzeichnet, daß** zum Grenzwert (ldimx) ein fester Betrag (LDDIMX) addiert wird, der etwa 0...5 % der oberen Schwelle der Stellgröße (ldtv) beträgt.

5. Verfahren nach Anspruch 1, **dadurch gekennzeichnet, daß** die schrittweise Vergrößerung oder Verringerung des adaptierten Korrekturwertes (ldimxa, ldimxaa) um eine Entprellzeit (TLDIAPN, TLDIAN) verzögert erfolgt, nachdem die Bedingungen für die Vergrößerung oder Verkleinerung des adaptierten Korrekturwertes (ldimxa, ldimxaa) erfüllt sind.

6. Verfahren nach Anspruch 5, **dadurch gekennzeichnet, daß** die Entprellzeit (TLDIAN) bei der Verringerung des adaptierten Korrekturwertes (ldimxa, ldimxaa) ein fest vorgegebener Wert ist und daß die Entprellzeit (TLDIAPN) bei der Vergrößerung des adaptierten Korrekturwertes (ldimxa, ldimxaa) aus einer von der Drehzahl (nmot) abhängigen Kennlinie entnommen wird.

7. Verfahren nach Anspruch 1, **dadurch gekennzeichnet, daß** bei einem Wechsel von einem Drehzahlbereich in einen anderen auftretende Sprünge (ldimxad) des adaptierten Korrekturwertes (ldimxa) in negative Richtung auf einen Minimalwert (LDMXNN) begrenzt werden und daß diese Begrenzung direkt nach der Aktivierung (B_ldr) der Ladedruckregelung entfällt.

8. Verfahren nach Anspruch 1, **dadurch gekennzeichnet, daß** der Grundwert (ldimxr) des Grenzwertes (ldimx) in Abhängigkeit der Drehzahl (nmot), des Soll-Ladedrucks (plsol) und des Umgebungsdrucks (pu) aus Kennfeldern (KFLDIMX, KFLDIOPU) hergeleitet wird.

## Claims

1. Method for controlling the supercharging of an internal combustion engine, a manipulated variable, which has at least one element which is supplied by an integral controller, being generated from the control error between the setpoint supercharging pressure and the actual supercharging pressure, and a limiting value, which is determined from a basic value which is dependent on a plurality of operational characteristic variables of the internal combustion engine and a correction value superimposed thereon, being predefined for the integral element, the correction value (ldimxa, ldimxaa) being determined adaptively as a function of the rotational speed (nmot), a plurality of rotational speed ranges being predefined, **characterized**
- **in that** the adapted correction value (ldimxa, ldimxaa) is decreased incrementally if the control error (lde) is smaller than a threshold (LDEIA) and the integral element (lditv) is smaller than the current limiting value,
- and **in that** the adaptive correction value (ldimxa, ldimxaa) is increased incrementally if the control error (lde) is greater than zero and the integral element (lditv) is equal or greater than the current limiting value (ldimx).

2. Method according to Claim 1, **characterized in that** the incremental decreasing of the adapted correction value (ldimxa, ldimxaa) is carried out only if there is full-load operation of the internal combustion engine and if the current limiting value (ldimx) of the integral element (lditv) is not at a lower threshold of the manipulated variable (ldtv).

3. Method according to Claim 1, **characterized in that** the incremental increasing of the adapted correction value (ldimxa, ldimxaa) is carried out only if the current limiting value (ldimx) of the integral element (lditv) is not at an upper threshold of the manipulated variable (ldtv).

4. Method according to Claim 1, **characterized in that** a fixed absolute value (LDDIMX), which constitutes approximately 0...5% of the upper threshold of the manipulated variable (ldtv), is added to the limiting value (ldimx).

5. Method according to Claim 1, **characterized in that** the incremental increasing or decreasing of the adapted correction value (ldimxa, ldimxaa) is delayed by a debounce time (TLDIAPN, TLDIAN) after the conditions for the increasing or decreasing of the adapted correction value (ldimxa, ldimxaa) are fulfilled.

6. Method according to Claim 5, **characterized in that** in the case of the decreasing of the adapted correction value (ldimxa, ldimxaa), the debounce time (TLDIAN) is a permanently predefined value, and **in that** in the case of the increasing of the adapted correction value (ldimxa, ldimxaa) the debounce time (TLDIAPN) is obtained from a characteristic curve which is dependent on the rotational speed (nmot).

7. Method according to Claim 1, **characterized in that** jumps (ldimxad) in the adaptive correction value (ldimxa) in the negative direction which occur when there is a change from one rotational speed range into another are limited to a minimum value (LDMXNN), and **in that** this limitation is dispensed with directly after the activation (B_ldr) of the supercharging pressure controller.

8. Method according to Claim 1, **characterized in that** the basic value (ldimxr) of the limiting value (ldimx) is derived from characteristic diagrams (KFLDIMX, KFLDIOPU) as a function of the rotational speed (nmot), as a function of the setpoint supercharging pressure (plsol) and of the ambient pressure (pu).

## Revendications

1. Procédé de régulation de la charge d'un moteur à combustion interne selon lequel, à partir de la déviation de régulation entre une pression de charge de consigne et une pression de charge réelle, on génère une grandeur de réglage qui comporte au moins une partie fournie par un régulateur intégral, une valeur limite étant prédéterminée pour la partie intégrale, cette valeur limite étant obtenue à partir d'une valeur de base dépendant de plusieurs paramètres de fonctionnement du moteur à combustion interne et d'une valeur de correction combinée à cette valeur de base,
la valeur de correction (ldimxa, ldimxaa) étant définie de manière adaptative en fonction de la vitesse de rotation (nmot), et plusieurs plages de vitesses de rotation (plages de régime) étant prédéterminées,
**caractérisé en ce que**
- on diminue pas à pas la valeur de correction adaptée ldimxa, (ldimxaa) si la déviation de régulation (lde) est inférieure à un seuil (LDEIA) et si la partie intégrale (lditv) est inférieure à la valeur limite actuelle, et
- on augmente pas à pas la valeur de correction adaptée (B-ldimxa, ldimxaa) si la déviation de régulation (lde) est supérieure à 0 et si la partie intégrale (lditv) est égale ou supérieure à la valeur limite actuelle (ldimx).

2. Procédé selon la revendication 1,
**caractérisé en ce qu'**
on diminue pas à pas la valeur de correction adaptée (B-ldimxa, ldimxaa) seulement si le moteur travaille à la charge maximale et si la valeur limite actuelle (ldimx) de la partie intégrale (lditv) ne se trouve pas au seuil inférieur de la grandeur de réglage (ldtv).

3. Procédé selon la revendication 1,
**caractérisé en ce qu'**
on augmente pas à pas la valeur de correction adaptative (B-ldimxa. ldimxaa) seulement si la valeur limite actuelle (dimx) de la partie intégrale (lditv) ne se situe pas au seuil supérieur de la grandeur de réglage (ldtv).

4. Procédé interne selon la revendication 1,
**caractérisé en ce qu'**
à la valeur limite (ldimx) on ajoute une valeur fixe (LDDIMX) qui représente entre 0 et 5% du seuil supérieur de la grandeur de réglage (ldtv).

5. Procédé selon la revendication 1,
**caractérisé en ce qu'**
on augmente ou on diminue pas à pas la valeur de correction adaptative (B-ldimxa, ldimxaa) d'un temps de rebondissement (ldimxaa, LTDIAN) une fois que les conditions d'augmentation ou de diminution de la valeur de correction adaptative (B-ldimxa, ldimxaa) sont remplies.

6. Procédé selon la revendication 5.
**caractérisé en ce que**
le temps de rebondissement (LTDIAN) pour la diminution de la valeur de correction adaptée (B-ldimxa, ldimxaa) est une valeur fixe prédéterminée et le temps de rebondissement (TLDIAPN) pour l'augmentation de la valeur de correction adaptée (B-ldimxa, ldimxaa) est pris sur une courbe caractéristique dépendant de la vitesse de rotation (nmot),

7. Procédé selon la revendication 1,
**caractérisé en ce qu'**
en cas de changement de plage de vitesse de rotation, on limite les sauts (ldimxad) de la valeur de correction adaptée (B-ldimxa) dans la direction négative à une valeur minimale (LDIMXNN) et cette limitation disparaît immédiatement après l'activation (B-ldr) de la régulation de la pression d'alimentation.

8. Procédé de régulation de la charge d'un moteur à combustion interne selon la revendication 1,
**caractérisé en ce qu'**
on déduit la valeur de base (ldimxr) de la valeur limite (ldimx) à partir de champs de caractéristiques (KFLDIMX, KFLDIOPU) en fonction de la vitesse de rotation (nmot), de la pression d'alimentation de consigne (plsoll) et de la pression ambiante (PU).
